# EUROPEAN PATENT SPECIFICATION

(11) **EP 3 778 165 B1**
(45) Date of publication and mention of the grant of the patent: **22.05.2024**
(21) Application number: 20198756.7
(22) Date of filing: 18.11.2015
(51) Int. Cl.: B29B 9/06, B29B 9/12, B29B 7/42, B29B 7/48, B29B 7/74, B29C 48/02, B29C 48/05, B29C 48/285, B29C 48/38, B29C 48/43, B29C 48/76, B29C 48/92, B29B 9/16, B29B 7/72, B29B 17/00, B29C 48/00, B29C 48/03, B29C 48/69, B29C 48/91, B29K 67/00, B29K 105/26

(54) **METHOD FOR MANUFACTURING PET-PELLETS FROM POST-CONSUMER BOTTLES**
VERFAHREN ZUR HERSTELLUNG VON PET-GRANULAT AUS GEBRAUCHTEN GETRÄNKEFLASCHEN
PROCÉDÉ DE FABRICATION DE GRANULÉS DE PET À PARTIR DE BOUTEILLES POST-CONSOMMATION

(30) Priority: 18.11.2014 US 201414546847
(43) Date of publication of application: 17.02.2021
(62) Divisional of application: 15861351.3
(73) Proprietor: Aladdin Manufacturing Corporation, Calhoun, GA 30701 (US)
(72) Inventor: CLARK, Thomas R., Hixson, TN 37343 (US)
(74) Representative: Unilin Technologies

(56) References cited:
- EP-A1- 1 293 527
- JP-A- 2001 334 528
- JP-A- 2004 155 176
- US-A1- 2006 043 646
- US-A1- 2006 160 909
- US-A1- 2007 052 131
- US-A1- 2009 264 545
- US-A1- 2014 225 293
- N.N.: "MRS extrusion technology offers new options in PET", PLASTICS ADDITIVES AND COMPOUNDING, ELSEVIER SCIENCE, OXOFRD, GB, vol. 11, no. 2, 1 March 2009 (2009-03-01), pages 24-26, XP026067788, ISSN: 1464-391X, DOI: 10.1016/S1464-391X(09)70050-9 [retrieved on 2009-03-01]

## Description

### BACKGROUND

Because pure virgin PET polymer is more expensive than recycled PET polymer, and because of the environmental benefits associated with using recycled polymer, it would be desirable to be able to produce bulked continuous carpet filament from 100% recycled PET polymer (e.g., PET polymer from post-consumer PET bottles).

US20060043646A1 describes a method for producing high-melting-tension heat-resistant sheets, boards, and molds from polyethylene terephthalate (PET). The process involves melting a mixture of PET polyester, coupling agent master batch, and catalyst master batch in a reaction-extruder to achieve PET polyester with a low melt flow rate. The resulting PET polyester is molded into amorphous sheets or boards, then heated to create transparent heat-resistant products. Alternatively, the material can be vacuum-, pressure-, or vacuum-pressure-formed after heat-setting to produce transparent heat-resistant or white opaque highly-heat-resistant molded articles.

The content of JP2004155176A addresses the manufacturing process for a high melting point melt bonding film from modified polyethylene terephthalate (PET). The process involves modifying a mixture of PET-based polyester, polyolefin with a carboxylic acid group, a binder master batch, and a catalyst master batch through reactive extrusion. This results in a branched long chain structure with a higher melting point of up to 250°C. The film is then formed by extrusion lamination, providing a solution for producing heat-sealing films with enhanced properties.

EP1293527A1 describes a masterbatch method for producing polyester resin and related articles. The process involves reacting saturated straight-chain polyester with a binder masterbatch containing compounds with epoxy groups and a catalyst masterbatch with a metal carboxylate.

US20060160909A1 relates to an improved method for cleaning contaminated polymer when that polymer is to be blended with clean material. The method involves combining the contaminated material and the clean material in a compartmentalized pellet wherein the contaminated material is placed in the outermost compartment, the clean material is placed in an inner compartment and then subjecting the pellet to an extraction process.

The content of US20070052131A1 relates to a PET-based polyester packaging film capable of weld-cut sealing and heat-shrinkage refers to a film obtained by biaxially orienting a material prepared through block copolymerization of a PET/PETG/polyester elastomer with an epoxy resin and a catalyst. This film eliminates the most serious weak points in physical properties of conventional PET films, and is useful for packaging of books, bottlesets, food containers, etc., for general packaging, packaging of industrial materials, and the like, and is further useful in the field of packing and packaging of daily commodities, civil engineering and construction members, electric and electronic members, and automobile vehicle members, etc. Moreover, this film can be produced through effective use of the huge amount of recycled PET bottles and inexpensive PET for fiber as a prepolymer, and thus is also highly beneficial socially. Still further, even if incinerated after use, this film produces a combustion heat value lower than that of a polyethylene or polypropylene. Thus, this film barely damages incinerators or the like, and emits no toxic gases.

US20090264545A1 describes polyester compositions having properties which are particularly suitable for extrusion blow molding. These properties relate primarily to the rate of crystallization and melt strength or melt viscosity. Articles prepared from the polyester compositions exhibit good clarity, aesthetics, and other physical properties. The polyester compositions also exhibit broad molecular weight distribution, resulting in improved processability and melt strength. The crystallization rate allows for good drying characteristics while also enabling the use of regrind. In addition, the compositions exhibit improved recyclability, such as in existing PET recycling streams. In one aspect, articles are prepared in an extrusion blow molding method by combining a dry first polyester copolymer component, a dry second polyester component, and a chain extender to form a feed material suitable for extrusion blow molding. In another aspect, a single component co-polyester and a chain extender are combined to form a feed material.

JP2001334528A relates to a pellet regeneration apparatus, which is constituted of a melting device for melting PET to extrude a sufficiently dried string-shaped strand, a strand gradual cooling device and a pelletizer. The gradual cooling device is formed from a blower, a mesh conveyor for transferring the strand, the wind reflecting plate provided to the mesh belt to be arranged on the back side of the running strand, a pair of wind barrier plates provided to both side edges of the upper part of the belt and a partition plate for partitioning a plurality of strands and, at a position where the strand of which the crystallization whitening is completed by cooling arrives, the pelletizer is arranged.

US201400225293 describes a method of manufacturing bulked continuous carpet filament which, in various embodiments, comprises: grinding recycled PET bottles into a group of flakes; washing the flakes; identifying and removing impurities, including impure flakes, from the group of flakes; passing the group of flakes through an MRS extruder while maintaining the pressure within the MRS portion of the MRS extruder below about 5 millibars; passing the resulting polymer melt through at least one filter having a micron rating of less than about 50 microns; and forming the recycled polymer into bulked continuous carpet filament that consists essentially of recycled PET.

The present invention is a method, according to claim 1, of manufacturing PET pellets, said method comprising:
- Preparing flakes of PET polymer from post-consumer bottles by (a) sorting post-consumer PET bottles and grinding said bottles into flakes, (b) washing said flakes, and identifying and removing impurities or impure flakes;
- passing the flakes through an extruder that melts the flakes and purifies the resulting PET polymer melt;
- running the molten PET polymer through a filtration system after extrusion; and
- pelletizing the molten PET polymer;
wherein said pelletizing includes
- passing strands of said molten PET polymer through a cooling bath to at least partially harden the polymer melt; and
- converting the polymer strands that have been cooled and at least partially solidified into pellets by cutting.

The method of manufacturing PET nurdles, in a preferred embodiment, comprises providing a multi-screw extruder that comprises: (i) a first satellite screw extruder, the first satellite screw extruder comprising a first satellite screw that is mounted to rotate about a central axis of the first satellite screw; (ii) a second satellite screw extruder, the second satellite screw extruder comprising a second satellite screw that is mounted to rotate about a central axis of the second satellite screw; and (iii) a pressure regulation system that is adapted to maintain a pressure within the first and second satellite screw extruders below about 18 millibars. In particular embodiments, the method further comprises: (A) using the pressure regulation system to reduce a pressure within the first and second satellite screw extruders to below about 18 millibars; (B) while maintaining the pressure within the first and second satellite screw extruders below about 18 millibars, passing a melt comprising recycled polymer through the multi-screw extruder so that: (1) a first portion of the melt passes through the first satellite screw extruder, and (2) a second portion of the melt passes through the second satellite screw extruder.

Preferably, (C) after the step of passing the melt of recycled polymer through the multi-screw extruder, pelletizing the polymer melt into a plurality of polymer nurdles.

Further preferred embodiments are claimed in the dependent claims.

### BRIEF DESCRIPTION OF THE DRAWINGS

Reference will now be made to the accompanying drawings, which are not necessarily drawn to scale, and wherein:

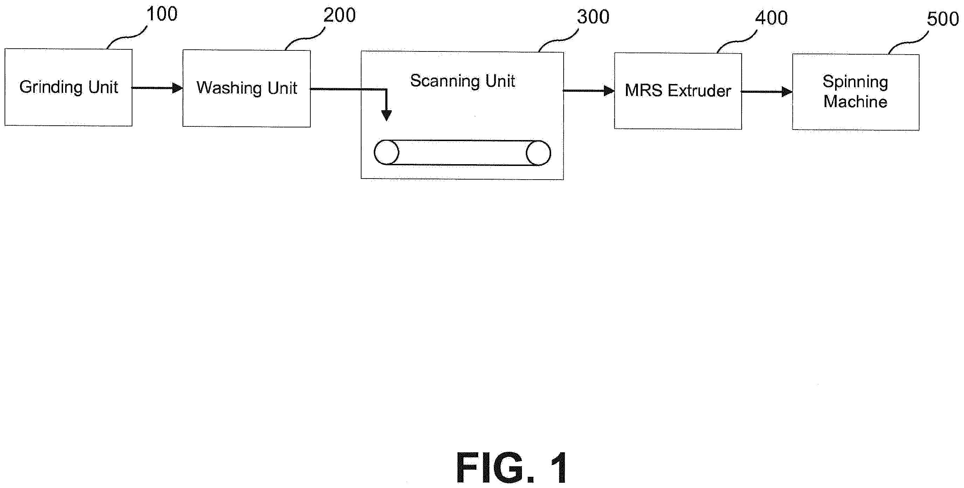

FIG. 1 depicts a process flow for manufacturing bulked continuous carpet filament.
FIG. 2 is a perspective view of an MRS extruder that is suitable for use in the process of FIG. 1.
FIG. 3 is a cross-sectional view of an exemplary MRS section of the MRS extruder of FIG. 2.
FIG. 4 depicts a process flow depicting the flow of polymer through an MRS extruder and filtration system according to a particular embodiment.
FIG. 5 is a high-level flow chart of a method, according to methods of manufacturing bulked continuous carpet filament.

### DETAILED DESCRIPTION OF VARIOUS EMBODIMENTS

Various embodiments will now be described in greater detail.

Like numbers refer to like elements throughout.

### I. Overview

New processes for making fiber from recycled polymer (e.g., recycled PET polymer) are described below. In various examples of processes, this new process: (1) is more effective than earlier processes in removing contaminates and water from the recycled polymer; and/or (2) does not require the polymer to be melted and cooled as many times as in earlier processes. The improved process results in a recycled PET polymer having a polymer quality that is high enough that the PET polymer may be used in producing bulked continuous carpet filament from 100% recycled PET content (e.g., 100% from PET obtained from previously used PET bottles). In particular embodiments, the recycled PET polymer has an intrinsic viscosity of at least about 0.79 dL/g (e.g., of between about 0.79 dL/g and about 1.00 dL/g).

### II. More Detailed Discussion

A BCF (bulked continuous filament) manufacturing process may generally be broken down into three steps: (1) preparing flakes of PET polymer from post-consumer bottles for use in the process; (2) passing the flakes through an extruder that melts the flakes and purifies the resulting PET polymer; and (3) feeding the purified polymer into a spinning machine that turns the polymer into filament for use in manufacturing carpets. These three steps are described in greater detail below.

### STEP 1: Preparing Flakes of PET Polymer from Post-Consumer Bottles

In the claimed invention, the step of preparing flakes of PET polymer from post-consumer bottles comprises: (A) sorting post-consumer PET bottles and grinding the bottles into flakes; (B) washing the flakes; and (C) identifying and removing any impurities or impure flakes.

### A. Sorting Post-Consumer PET bottles and Grinding the Bottles into Flakes

In particular embodiments, bales of clear and mixed colored recycled post-consumer (e.g., "curbside") PET bottles (or other containers) obtained from various recycling facilities make-up the post-consumer PET containers for use in the process. In other embodiments, the source of the post-consumer PET containers may be returned 'deposit' bottles (e.g., PET bottles whose price includes a deposit that is returned to a customer when the customer returns the bottle after consuming the bottle's contents). The curbside or returned "post-consumer" or "recycled" containers may contain a small level of non-PET contaminates. The contaminants in the containers may include, for example, non-PET polymeric contaminants (e.g., PVC, PLA, PP, PE, PS, PA, etc.), metal (e.g., ferrous and non-ferrous metal), paper, cardboard, sand, glass or other unwanted materials that may find their way into the collection of recycled PET. The non-PET contaminants may be removed from the desired PET components, for example, through one or more of the various processes described below.

In particular embodiments, smaller components and debris (e.g., components and debris greater than 5.08 cm (2 inches) in size) are removed from the whole bottles via a rotating trammel. Various metal removal magnets and eddy current systems may be incorporated into the process to remove any metal contaminants. Near Infra-Red optical sorting equipment such as the NRT Multi Sort IR machine from Bulk Handling Systems Company of Eugene, Oregon, or the Spyder IR machine from National Recovery Technologies of Nashville, Tennessee, may be utilized to remove any loose polymeric contaminants that may be mixed in with the PET flakes (e.g., PVC, PLA, PP, PE, PS, and PA). Additionally, automated X-ray sorting equipment such as a VINYLCYCLE machine from National Recovery Technologies of Nashville, Tennessee may be utilized to remove remaining PVC contaminants.

In particular embodiments, a binary segregation of the clear materials from the colored materials is achieved using automated color sorting equipment equipped with a camera detection system (e.g., an Multisort ES machine from National Recovery Technologies of Nashville, Tennessee). In various embodiments, manual sorters are stationed at various points on the line to remove contaminants not removed by the sorter and any colored bottles. In particular embodiments, the sorted material is taken through a granulation step (e.g., using a 50B Granulator machine from Cumberland Engineering Corporation of New Berlin, Wisconsin) to size reduce (e.g., grind) the bottles down to a size of less than 1.27 cm (one half of an inch). In various embodiments, the bottle labels are removed from the resultant "dirty flake" (e.g., the PET flakes formed during the granulation step) via an air separation system prior to entering the wash process.

### B. Washing the Flakes

In particular embodiments, the "dirty flake" is then mixed into a series of wash tanks. As part of the wash process, in various embodiments, an aqueous density separation is utilized to separate the olefin bottle caps (which may, for example, be present in the "dirty flake" as remnants from recycled PET bottles) from the higher specific gravity PET flakes. In particular embodiments, the flakes are washed in a heated caustic bath to about 87,8 degrees Celsius (190 degrees Fahrenheit). In particular embodiments, the caustic bath is maintained at a concentration of between about 0.6% and about 1.2% sodium hydroxide. In various embodiments, soap surfactants as well as defoaming agents are added to the caustic bath, for example, to further increase the separation and cleaning of the flakes. A double rinse system then washes the caustic from the flakes.

In various embodiments, the flake is centrifugally dewatered and then dried with hot air to at least substantially remove any surface moisture. The resultant "clean flake" is then processed through an electrostatic separation system (e.g., an electrostatic separator from Carpco, Inc. of Jacksonville, Florida) and a flake metal detection system (e.g., an MSS Metal Sorting System) to further remove any metal contaminants that remain in the flake. In particular embodiments, an air separation step removes any remaining label from the clean flake. In various embodiments, the flake is then taken through a flake color sorting step (e.g., using an OPTIMIX machine from TSM Control Systems of Dundalk, Ireland) to remove any remaining color contaminants remaining in the flake. In various embodiments, an electro-optical flake sorter based at least in part on Raman technology (e.g., a Powersort 200 from Unisensor Sensorsysteme GmbH of Karlsruhe, Germany) performs the final polymer separation to remove any non-PET polymers remaining in the flake. This step may also further remove any remaining metal contaminants and color contaminants.

In various embodiments, the combination of these steps delivers substantially clean (e.g., clean) PET bottle flake comprising less than about 50 parts per million PVC (e.g., 25 ppm PVC) and less than about 15 parts per million metals for use in the downstream extrusion process described below.

### C. Identifying and Removing Impurities and Impure Flakes

In particular embodiments, after the flakes are washed, they are fed down a conveyor and scanned with a high-speed laser system 300. In various embodiments, particular lasers that make up the high-speed laser system 300 are configured to detect the presence of particular contaminates (e.g., PVC or Aluminum). Flakes that are identified as not consisting essentially of PET may be blown from the main stream of flakes with air jets. In various embodiments, the resulting level of non-PET flakes is less than 25 ppm.

In various embodiments, the system is adapted to ensure that the PET polymer being processed into filament is substantially free of water (e.g., entirely free of water). In a particular embodiment, the flakes are placed into a pre-conditioner for between about 20 and about 40 minutes (e.g., about 30 minutes) during which the pre-conditioner blows the surface water off of the flakes. In particular embodiments, interstitial water remains within the flakes. In various embodiments, these "wet" flakes (e.g., flakes comprising interstitial water) may then be fed into an extruder (e.g., as described in Step 2 below), which includes a vacuum setup designed to remove - among other things - the interstitial water that remains present in the flakes following the quick-drying process described above.

### STEP 2: Using an Extrusion System to Melt and Purify PET Flakes

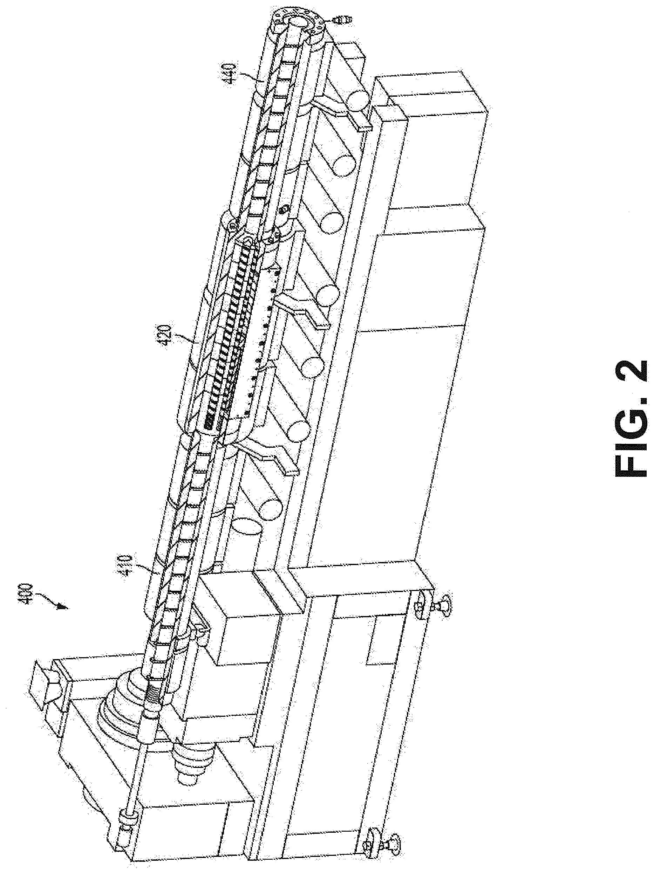

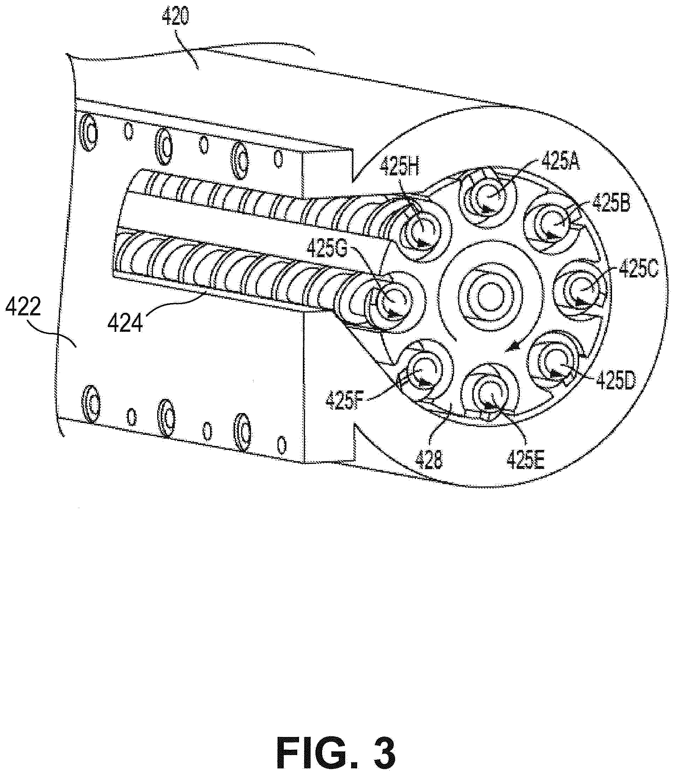

In particular embodiments, an extruder is used to turn the wet flakes described above into a molten recycled PET polymer and to perform a number of purification processes to prepare the polymer to be turned into BCF for carpet. As noted above, in various embodiments, after STEP 1 is complete, the recycled PET polymer flakes are wet (e.g., surface water is substantially removed (e.g., fully removed) from the flakes, but interstitial water remains in the flakes). In particular embodiments, these wet flakes are fed into a Multiple Rotating Screw ("MRS") extruder 400. In other embodiments, the wet flakes are fed into any other suitable extruder (e.g., a twin screw extruder, a multiple screw extruder, a planetary extruder, or any other suitable extrusion system). An exemplary MRS Extruder 400 is shown in Figures 2 and 3. A particular example of such an MRS extruder is described in U.S. Published Patent Application 2005/0047267, entitled "Extruder for Producing Molten Plastic Materials", which was published on March 3, 2005, and which is hereby incorporated herein by reference.

As may be understood from this figure, in particular embodiments, the MRS extruder includes a first single-screw extruder section 410 for feeding material into an MRS section 420 and a second single-screw extruder section 440 for transporting material away from the MRS section.

In various embodiments, the wet flakes are fed directly into the MRS extruder 400 substantially immediately (e.g., immediately) following the washing step described above (e.g., without drying the flakes or allowing the flakes to dry). In particular embodiments, a system that feeds the wet flakes directly into the MRS Extruder 400 substantially immediately (e.g., immediately) following the washing step described above may consume about 20% less energy than a system that substantially fully pre-dries the flakes before extrusion (e.g., a system that pre-dries the flakes by passing hot air over the wet flakes for a prolonged period of time). In various embodiments, a system that feeds the wet flakes directly into the MRS Extruder 400 substantially immediately (e.g., immediately) following the washing step described above avoids the need to wait a period of time (e.g., up to eight hours) generally required to fully dry the flakes (e.g., remove all of the surface and interstitial water from the flakes).

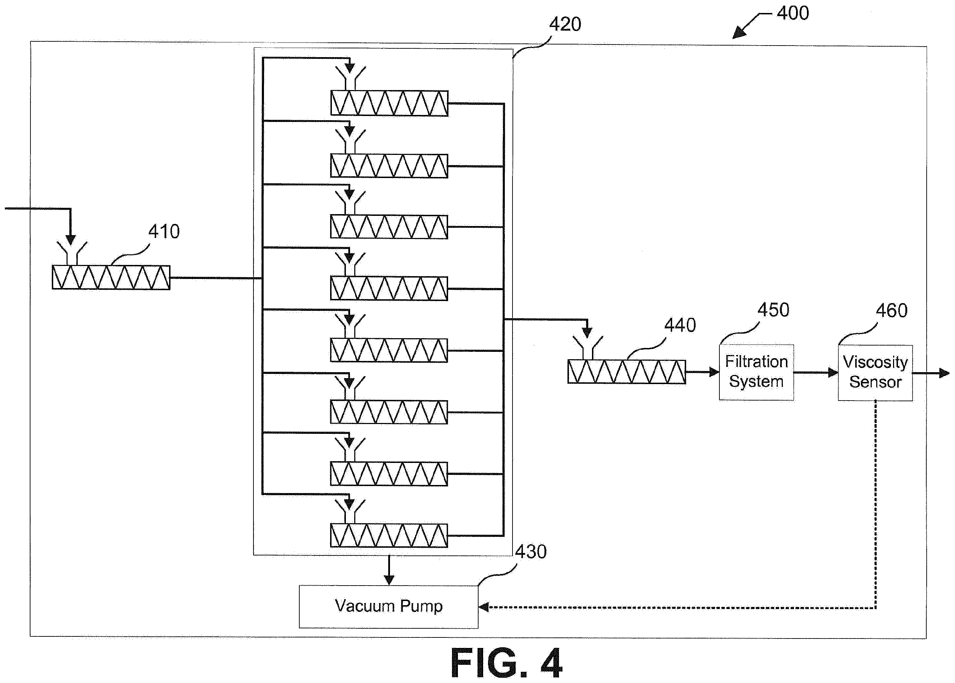

Figure 4 depicts a process flow that illustrates the various processes performed by the MRS Extruder 400 in a particular embodiment. In the embodiment shown in this figure, the wet flakes are first fed through the MRS extruder's first single-screw extruder section 410, which may, for example, generate sufficient heat (e.g., via shearing) to at least substantially melt (e.g., melt) the wet flakes.

The resultant polymer melt (e.g., comprising the melted flakes), in various embodiments, is then fed into the extruder's MRS section 420, in which the extruder separates the melt flow into a plurality of different streams (e.g., 4, 6, 8, or more streams) through a plurality of open chambers. Figure 3 shows a detailed cutaway view of an MRS Section 420 according to a particular embodiment. In particular embodiments, such as the embodiment shown in this figure, the MRS Section 420 separates the melt flow into eight different streams, which are subsequently fed through eight satellite screws 425A-H. As may be understood from Figure 2, in particular embodiments, these satellite screws are substantially parallel (e.g., parallel) to one other and to a primary screw axis of the MRS Machine 400.

In the MRS section 420, in various embodiments, the satellite screws 425A-H may, for example, rotate faster than (e.g., about four times faster than) in previous systems. As shown in Figure 3, in particular embodiments: (1) the satellite screws 425A-H are arranged within a single screw drum 428 that is mounted to rotate about its central axis; and (2) the satellite screws 425A-H are configured to rotate in a direction that is opposite to the direction in which the single screw drum rotates 428. In various other embodiments, the satellite screws 425A-H and the single screw drum 428 rotate in the same direction. In particular embodiments, the rotation of the satellite screws 425A-H is driven by a ring gear. Also, in various embodiments, the single screw drum 428 rotates about four times faster than each individual satellite screw 425A-H. In certain embodiments, the satellite screws 425A-H rotate at substantially similar (e.g., the same) speeds.

In various embodiments, as may be understood from Figure 4, the satellite screws 425A-H are housed within respective extruder barrels, which may, for example be about 30% open to the outer chamber of the MRS section 420. In particular embodiments, the rotation of the satellite screws 425A-H and single screw drum 428 increases the surface exchange of the polymer melt (e.g., exposes more surface area of the melted polymer to the open chamber than in previous systems). In various embodiments, the MRS section 420 creates a melt surface area that is, for example, between about twenty and about thirty times greater than the melt surface area created by a co-rotating twin screw extruder. In a particular embodiment, the MRS section 420 creates a melt surface area that is, for example, about twenty five times greater than the melt surface area created by a co-rotating twin screw extruder

In various embodiments, the MRS extruder's MRS Section 420 is fitted with a Vacuum Pump 430 that is attached to a vacuum attachment portion 422 of the MRS section 420 so that the Vacuum Pump 430 is in communication with the interior of the MRS section via a suitable opening 424 in the MRS section's housing. In still other embodiments, the MRS Section 420 is fitted with a series of Vacuum Pumps. In particular embodiments, the Vacuum Pump 430 is configured to reduce the pressure within the interior of the MRS Section 420 to a pressure that is between about 0.5 millibars and about 5 millibars. In particular embodiments, the Vacuum Pump 430 is configured to reduce the pressure in the MRS Section 420 to less than about 1.5 millibars (e.g., about 1 millibar or less). The low-pressure vacuum created by the Vacuum Pump 430 in the MRS Section 420 may remove, for example: (1) volatile organics present in the melted polymer as the melted polymer passes through the MRS Section 420; and/or (2) at least a portion of any interstitial water that was present in the wet flakes when the wet flakes entered the MRS Extruder 400. In various embodiments, the low-pressure vacuum removes substantially all (e.g., all) of the water and contaminants from the polymer stream.

In a particular example, the Vacuum Pump 430 comprises three mechanical lobe vacuum pumps (e.g., arranged in series) to reduce the pressure in the chamber to a suitable level (e.g., to a pressure of about 1.0 millibar). In other embodiments, rather than the three mechanical lobe vacuum pump arrangement discussed above, the Vacuum Pump 430 includes a jet vacuum pump fit to the MRS extruder. In various embodiments, the jet vacuum pump is configured to achieve about 1 millibar of pressure in the interior of the MRS section 420 and about the same results described above regarding a resulting intrinsic viscosity of the polymer melt. In various embodiments, using a jet vacuum pump can be advantageous because jet vacuum pumps are steam powered and therefore substantially self-cleaning (e.g., self-cleaning), thereby reducing the maintenance required in comparison to mechanical lobe pumps (which may, for example, require repeated cleaning due to volatiles coming off and condensing on the lobes of the pump). In a particular embodiment, the Vacuum Pump 430 is a jet vacuum pump is made by Arpuma GmbH of Bergheim, Germany.

In particular embodiments, after the molten polymer is run through the multi-stream MRS Section 420, the streams of molten polymer are recombined and flow into the MRS extruder's second single screw section 440. In various embodiments, the single stream of molten polymer is next run through a filtration system 450 that includes at least one filter. In a particular embodiment, the filtration system 450 includes two levels of filtration (e.g., a 40 micron screen filter followed by a 25 micron screen filter). Although, in various embodiments, water and volatile organic impurities are removed during the vacuum process as discussed above, particulate contaminates such as, for example, aluminum particles, sand, dirt, and other contaminants may remain in the polymer melt. Thus, this filtration step may be advantageous in removing particulate contaminates (e.g., particulate contaminates that were not removed in the MRS Section 420).

In particular embodiments, a viscosity sensor 460 (see Figure 4) is used to sense the melt viscosity of the molten polymer stream following its passage through the filtration system 450. In various embodiments, the viscosity sensor 460, measures the melt viscosity of the stream, for example, by measuring the stream's pressure drop across a known area. In particular embodiments, in response to measuring an intrinsic viscosity of the stream that is below a predetermined level (e.g., below about 0.8 g/dL), the system may: (1) discard the portion of the stream with low intrinsic viscosity; and/or (2) lower the pressure in the MRS Section 420 in order to achieve a higher intrinsic viscosity in the polymer melt. In particular embodiments, decreasing the pressure in the MRS Section 420 is executed in a substantially automated manner (e.g., automatically) using the viscosity sensor in a computer-controlled feedback control loop with the vacuum section 430.

In particular embodiments, removing the water and contaminates from the polymer improves the intrinsic viscosity of the recycled PET polymer by allowing polymer chains in the polymer to reconnect and extend the chain length. In particular embodiments, following its passage through the MRS Section 420 with its attached Vacuum Pump 430, the recycled polymer melt has an intrinsic viscosity of at least about 0.79 dL/g (e.g., of between about 0.79 dL/g and about 1.00 dL/g). In particular embodiments, passage through the low pressure MRS Section 420 purifies the recycled polymer melt (e.g., by removing the contaminants and interstitial water) and makes the recycled polymer substantially structurally similar to (e.g., structurally the same as) pure virgin PET polymer. In particular embodiments, the water removed by the vacuum includes both water from the wash water used to clean the recycled PET bottles as described above, as well as from unreacted water generated by the melting of the PET polymer in the single screw heater 410 (e.g., interstitial water). In particular embodiments, the majority of water present in the polymer is wash water, but some percentage may be unreacted water.

In particular embodiments, the resulting polymer is a recycled PET polymer (e.g., obtained 100% from post-consumer PET products, such as PET bottles or containers) having a polymer quality that is suitable for use in producing PET carpet filament using substantially only (e.g., only) PET from recycled PET products.

### Step 3: Purified PET Polymer Fed into Spinning Machine to be Turned into Carpet Yarn

After the recycled PET polymer has been extruded and purified by the above-described extrusion process, the resulting molten recycled PET polymer can be - not according to the claimed invention - fed directly into a BCF (or "spinning") machine 500 that is configured to turn the molten polymer into bulked continuous filament. For example, in various embodiments, the output of the MRS extruder 400 is connected substantially directly (e.g., directly) to the input of the spinning machine 500 so that molten polymer from the extruder is fed directly into the spinning machine 500. This process may be advantageous because molten polymer may, in certain embodiments, not need to be cooled into pellets after extrusion (as it would need to be if the recycled polymer were being mixed with virgin PET polymer). In particular embodiments, not cooling the recycled molten polymer into pellets serves to avoid potential chain scission in the polymer that might lower the polymer's intrinsic viscosity.

The spinning machine 500 may extrude molten polymer through small holes in a spinneret in order to produce carpet yarn filament from the polymer. The molten recycled PET polymer can cool after leaving the spinneret. The carpet yarn is then taken up by rollers and ultimately turned into filaments that are used to produce carpet. The carpet yarn produced by the spinning machine 500 may have a tenacity between about 3 gram-force per unit denier (gf/den) and about 9 gf/den. The resulting carpet yarn can have a tenacity of at least about 3 gf/den.

The spinning machine 500 used in the process described above can be the Sytec One spinning machine manufactured by Oerlika Neumag of Neumuenster, Germany. The Sytec One machine may be especially adapted for hard-to-run fibers, such as nylon or solution-dyed fibers, where the filaments are prone to breakage during processing. The Sytec One machine keeps the runs downstream of the spinneret as straight as possible, uses only one threadline, and is designed to be quick to rethread when there are filament breaks.

Although the example described above describes using the Sytec One spinning machine to produce carpet yarn filament from the polymer, it should be understood that any other suitable spinning machine may be used. Such spinning machines may include, for example, any suitable one-threadline or three-threadline spinning machine made by Oerlikon Neumag of Neumuenster, Germany or any other company.

The improved strength of the recycled PET polymer generated using the process above allows it to be run at higher speeds through the spinning machine 500 than would be possible using pure virgin PET polymer. This may allow for higher processing speeds than are possible when using virgin PET polymer.

### Summary of Exemplary Process

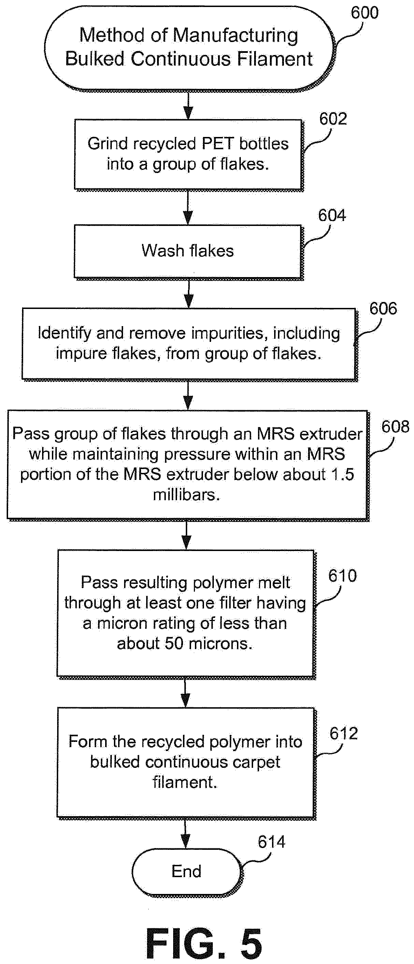

Figure 5 provides a high-level summary of the method of manufacturing bulked continuous filament described above, which is not according to the claimed invention. As shown in the figure, the method begins at Step 602, where recycled PET bottles are ground into a group of flakes. Next, at Step 604, the group of flakes is washed to remove contaminants from the flakes' respective outer surfaces. Next, at Step 606, the group of flakes is scanned (e.g., using one or more of the methods discussed above) to identify impurities, including impure flakes. These impurities, and impure flakes, are then removed from the group of flakes.

Next, at Step 608, the group of flakes is passed through an MRS extruder while maintaining the pressure within an MRS portion of the extruder below about 1.5 millibars. At Step 610, the resulting polymer melt is passed through at least one filter having a micron rating of less than about 50 microns. Finally, at Step 612, the recycled polymer is formed into bulked continuous carpet filament, which may be used in producing carpet. The method then ends at Step 614.

### Alternative Embodiments

The system may comprise alternative components or perform alternative processes in order to produce substantially continuous BCF from 100% recycled PET, or other recycled polymer. Exemplary alternatives are discussed below.

### Non-MRS Extrusion System

The process may utilize a polymer flow extrusion system other than the MRS Extruder described above. The alternative extrusion system may include for example, a twin screw extruder, a multiple screw extruder, a planetary extruder, or any other suitable extrusion system. In a particular embodiment, the process may include a plurality of any combination of any suitable conical screw extruders (e.g., four twin screw extruders, three multiple screw extruders, etc.).

### Making Carpet Yarn from 100% Recycled Carpet

The process described above may be adapted for processing and preparing old carpet (or any other suitable post-consumer product) to produce new carpet yarn comprising 100% recycled carpet. The process would begin by grinding and washing recycled carpet rather than recycled PET bottles. In various embodiments where old carpet is converted into new carpet yarn comprising 100% recycled carpet, the process may comprise additional steps to remove additional materials or impurities that may be present in recycled carpet that may not be present in recycled PET bottles (e.g., carpet backing, adhesive, etc.).

### Other Sources of Recycled PET

The process described above is adapted for processing recycled PET from any suitable source (e.g., sources other than recycled bottles or carpet) to produce new carpet yarn comprising 100% recycled PET.

### The Use of a Crystallizer as Part of BCF Process

The process for producing recycled BCF may further include a crystallizing step that utilizes one or more PET crystallizers. In particular embodiments, the system is configured to perform the crystallization step on the ground flakes prior to running the flakes through the one or more extruders (e.g., single screw extruder, MRS extruder, etc.). In particular embodiments, the PET crystallizer comprises a hopper screw (e.g., an auger), a stirring apparatus, and one or more blowers.

### Hopper Screw

In particular embodiments, the hopper screw is configured to feed PET flakes into the crystallizer. In various embodiments, the PET crystallizer is configured to feed the PET flakes into the crystallizer using the hopper screw relatively slowly.

### Stirring Apparatus

In various embodiments, the stirring apparatus may be operated, for example, by any suitable gear motor. In particular embodiments, the stirring apparatus is configured to at least partially reduce agglomeration (e.g., sticking or clumping of the flake) while the flake is at least partially crystallizing in the crystallizer. In particular embodiments, the stirring apparatus comprises the hopper screw.

### One or More Blowers

In various embodiments, the crystallizer further comprises one or more blowers configured to blow hot air over the flake as the flake passes through the crystallizer. In particular embodiments, the one or more blowers are configured to maintain a temperature within the crystallizer at least about 60 degrees Celsius (140 degree Fahrenheit). In other embodiments, the one or more blowers are configured to maintain the temperature in the crystallizer between about 60 degrees Celsius (140 degrees Fahrenheit) and about 82,2 degrees Celsius (180 degrees Fahrenheit). In some embodiments, the one or more blowers are configured to blow hot air from a bottom portion of the crystallizer and draw air from an upper portion of the crystallizer.

In particular embodiments, the crystallizer at least partially dries the surface of the PET flakes. In various embodiments, the use of drier flakes may enable the system to run the flakes through the MRS extruder more slowly, which may allow for higher pressure within the MRS extruder during extrusion (e.g., may enable the system to maintain a higher pressure within the MRS extruder, rather than very low pressure). In various embodiments of the process, the pressure regulation system may be configured to maintain a pressure within the MRS extruder of between about 0 millibars and about 25 millibars. In particular embodiments, such as embodiments in which the PET flakes have been run through a crystallizer before being extruded in the MRS extruder, the pressure regulation system may be configured to maintain a pressure within the MRS extruder of about 0 and about 18 millibars. In other embodiments, the pressure regulation system may be configured to maintain a pressure within the MRS extruder between about 0 and about 12 millibars. In still other embodiments, the pressure regulation system may be configured to maintain a pressure within the MRS extruder between about 0 and about 8 millibars. In still other embodiments, the pressure regulation system may be configured to maintain a pressure within the MRS extruder between about 5 millibars and about 10 millibars. In particular embodiments, the pressure regulation system may be configured to maintain a pressure within the MRS extruder at about 5 millibars, about 6 millibars, about 7 millibars, about 8 millibars, about 9 millibars, or about any suitable pressure between about 0 millibars and about 25 millibars. It should be understood that the disclosure of any numerical ranges listed herein includes a disclosure of each distinct number within those numerical ranges. For example, the disclosure of a range of between about 10 millibars and about 15 millibars should also be understood to constitute a disclosure of about 11 millibars, about 12 millibars, about 13 millibars, about 13.5 millibars, etc...

In particular embodiments, the crystallizer causes the flakes to at least partially reduce in size, which may, for example, reduce a potential for the flakes to stick together. In particular embodiments, the crystallizer may particularly reduce stickiness of larger flakes, which may, for example, include flakes comprising portions of the ground PET bottles which may be thicker than other portions of the PET bottles (e.g., flakes from a threaded portion of the PET bottle on which a cap would typically be screwed).

### Use of Curbside Recycling v. Deposit Bottles in Process

The system can be configured to utilize recycled PET of varying quality in the process described above. For example, the system - not according to the claimed invention - is configured to produce bulked continuous carpet filament from PET derived from PET bottles sourced from curbside recycling sources (e.g., PET bottles that were collected as part of a general bulk recycling program or other recycling source) and/or deposit PET bottles (e.g., bottles returned as part of a deposit program). In various embodiments, Curbside recycled bottles may require more thorough processing in order to produce bulked continuous filament, as curbside recycled PET bottles may be mixed in with and otherwise include contaminants such as, for example: other recyclable goods (e.g., paper, other plastics, etc.), garbage, and other non-PET bottle items due to imperfect sorting of recycled goods or for any other reason. Deposit PET bottles may include PET bottles with fewer unwanted contaminants due in part because deposit PET bottles may be collected separately from other recyclable or disposable goods.

Curbside recycled PET bottles acquired during particular times of year may include more impurities and other contaminants than at other times of the year. For example, curbside recycled PET bottles collected during summer months may comprise a higher percentage of clear PET bottles (e.g., water bottles) at least in part due to additional water consumption during summer months.

The system described above may be configured to adjust particular components of the process based at least in part on the source of recycled PET being used to produce the bulked continuous carpet filament. For example, because deposit PET bottles include fewer impurities that need to be removed during the initial cleaning and sorting phases of the process, the pressure regulation system may be configured to maintain a pressure within the MRS extruder that is higher than a pressure that it would be configured to maintain for flake derived from curbside recycled PET bottles. The pressure regulation system may be configured to maintain a pressure within the MRS extruder of between about 0 millibars and about 12 millibars when flakes derived from deposit PET bottles are passing through the MRS extruder. The pressure regulation system may be configured to maintain a pressure within the MRS extruder of between about 5 millibars and about 10 millibars in such instances.

In various embodiments, the system is configured to determine a suitable pressure at which to maintain the pressure within the MRS extruder based at least in part on the source of the recycled PET. In other embodiments, the system is configured to omit one or more of the steps above or include one or more additional steps to the steps described above based at least in part on the source of the recycled PET.

### The Use of the BCF Process for Producing PET or Other Plastic Nurdles

In the claimed invention, various steps of the BCF process described above are utilized in the production of PET pellets called nurdles. These nurdles may, in various embodiments, be used to produce any suitable PET or other suitable plastic product (e.g., bottles, containers, etc.) For example, following the MRS extrusion process described above, molten polymer may be cooled into a plurality of plastic pellets (e.g., following extrusion of the molten polymer). These at least approximately 100% recycled plastic pellets may then be used in the production of any suitable PET product, combined (e.g., mixed) with virgin PET pellets in any suitable ratio in order to produce any suitable PET or other product, and/or be put to any other suitable use.

In the claimed invention, a process for producing PET Nurdles includes: (1) preparing flakes of PET polymer from post-consumer bottles for use in the process; (2) passing the flakes through any suitable extruder (e.g., such as the MRS extruder described above) that melts the flakes and purifies the resulting PET polymer melt; and (3) pelletizing the molten polymer.

In particular embodiments, the system may be configured to utilize any suitable pelletizing technique. For example, in a particular embodiment, the system is configured to utilize melt pelletizing, which may include, for example, include: (1) extruding the polymer melt through one or more dies; and (2) cutting the polymer melt into pellets that are conveyed and cooled by a suitable liquid or gas.

In the claimed invention, the system utilizes strand pelletizing which includes: (1) passing strands of the molten polymer through a suitable cooling bath to at least partially harden the polymer melt; and (2) cutting the hardened polymer melt into pellets. In particular embodiments, the molten polymer is cooled by extrusion into a water bath and pelletized. In various embodiments, the water bath is maintained at a temperature substantially lower than that of the molten polymer. In a particular embodiment, the temperature of the water bath substantially corresponds to a maximum crystallization temperature of the molten polymer. In various embodiments, the maximum crystallization temperature of PET is between about 140 and about 230 degrees Celsius. In a particular embodiment, the maximum crystallization temperature is about 180 degrees Celsius. In various embodiments, it may be desirable to maximize a level of crystallinity at a surface of the pellets to substantially render the surfaces less tacky, which may reduce a likelihood of agglomeration.

In other embodiments, the water bath may be configured to maintain a lower temperature within the water bath (e.g., between about 20 degrees Celsius and about 80 degrees Celsius) to at least substantially cool the polymer melt for pelletizing. In such embodiments, the system may be configured to at least partially heat the resulting PET nurdles following pellitization (e.g., in order to at least partially crystallize the resulting nurdles).

In particular embodiments, the process may include maintaining a relatively low surface tension in the water bath, for example via introduction of one or more surfactants. In particular embodiments, surfactants may promote the migration of low surface energy hydrocarbons toward pellet surfaces, which may enhance surface crystallization and help to reduce the likelihood of agglomeration. Examples of useful surfactants include ethylene glycol trisiloxane, polyoxyethylene glycol monoalkyl ether with dodecanol, phospate based alkyl polyethylene oxide surfactants, Dynol-607 (Air Products), and Carbowet-106 (Air Products).

In particular embodiments, following water bath cooling, the system may be configured to at least partially wipe residual water from the surface of the resulting polymer strands, for example using any suitable suction air knife. The substantially dry, substantially solidified polymer strands may then be transported to a pelletizer and cut into pellets. In various embodiments, the strand pelletizing process described above may result in nurdles that are substantially cylindrical in shape.

For example, although the vacuum system discussed above is described as being configured to maintain the pressure in the open chambers of the MRS extruder to about 1 mbar, in other embodiments, the vacuum system may be adapted to maintain the pressure in the open chambers of the MRS extruder at pressures greater than, or less than, 1 mbar. For example, the vacuum system may be adapted to maintain this pressure at between about 0.5 mbar and about 12 mbar.

Similarly, although various systems described above may be adapted to produce carpet filament from substantially only recycled PET (so the resulting carpet filament would comprise, consist of, and/or consist essentially of recycled PET), in other embodiments, the system may be adapted to produce carpet filament from a combination of recycled PET and virgin PET. The resulting carpet filament may, for example, comprise, consist of, and/or consist essentially of between about 80% and about 100% recycled PET, and between about 0% and about 20% virgin PET.

## Claims

1. Method for manufacturing PET pellets, said method comprising:
- preparing flakes of PET polymer from post-consumer bottles by (a) sorting post-consumer PET bottles and grinding said bottles into flakes, (b) washing said flakes, and (c) identifying and removing impurities or impure flakes;
- passing the flakes through an extruder (400) that melts the flakes and purifies the resulting PET polymer melt;
- running the molten PET polymer through a filtration system (450) after extrusion; and
- pelletizing the molten PET polymer;
wherein said pelletizing includes
- passing strands of said molten PET polymer through a cooling bath to at least partially harden the polymer melt; and
- converting the polymer strands that have been cooled and at least partially solidified into pellets by cutting.

2. Method according to claim 1, **characterized in that** said molten PET polymer is cooled by extrusion into said cooling bath, wherein said cooling bath is a water bath.

3. Method according to claim 2, **characterized in that** the temperature of said water bath is between about 140 and about 230°C.

4. Method according to claim 2, **characterized in that** said the temperature of said water bath is between about 20 and about 80°C.

5. Method according to any of claims 2 to 4, **characterized in that** said water bath further includes one or more surfactants.

6. Method according to any of claims 2 to 5, **characterized in that** residual water from the surface of the polymer strands is at least partially wiped before being transported to the pelletizer.

7. Method according to any of the preceding claims, **characterized in that** said pellets are nurdles that are substantially cylindrical in shape.

8. Method according to any of the preceding claims, **characterized in that** said extruder (400) is a twin screw extruder, a multiple screw extruder or a planetary extruder.

9. Method according to any of the preceding claims, **characterized in that** a viscosity sensor (460) is used to sense the melt viscosity of the molten polymer following its passage through the filtration system (450).

10. Method according to any one of the preceding claims, **characterized in that** said filtration system (450) comprises at least one filter having a micron rating of less than about 50 microns.

11. Method according any of the preceding claims, **characterized in that** said extruder is a multi-screw extruder that comprises:
(i) a first satellite screw extruder, said first satellite screw extruder comprising a first satellite screw that is mounted to rotate about a central axis of said first satellite screw;
(ii) a second satellite screw extruder, said second satellite screw extruder comprising a second satellite screw that is mounted to rotate about a central axis of said second satellite screw; and
(iii) a pressure regulation system that is adapted to maintain a pressure within said first and second satellite screw extruders below about 18 millibars;
using said pressure regulation system to reduce a pressure within said first and second satellite screw extruders to below about 18 millibars;
while maintaining said pressure within said first and second satellite screw extruders below about 18 millibars, passing a melt comprising recycled polymer through said multi-screw extruder so that: (1) a first portion of said melt passes through said first satellite screw extruder, and (2) a second portion of said melt passes through said second satellite screw extruder.

12. Method according to any of the preceding claims, **characterized in that** substantially clean PET bottle flakes comprising less than about 50 ppm PVC and less than about 15 ppm metals are passed through the extruder.

13. Method according to any of the preceding claims, **characterized in that** said flakes are fed directly into the extruder following said washing.

## Patentansprüche

1. Verfahren zum Fertigen von PET-Pellets, wobei das Verfahren umfasst:
- Herstellen von Flocken aus PET-Polymer aus gebrauchten Flaschen (Post-Consumer-Flaschen) durch (a) Sortieren von Post-Consumer-PET-Flaschen und Mahlen der Flaschen zu Flocken, (b) Waschen der Flocken und (c) Identifizieren und Entfernen von Verunreinigungen oder unreinen Flocken;
- Leiten der Flocken durch einen Extruder (400), der die Flocken schmilzt und die resultierende PET-Polymerschmelze reinigt;
- Führen des geschmolzenen PET-Polymers durch ein Filtrationssystem (450) nach der Extrusion; und
- Pelletieren des geschmolzenen PET-Polymers,
wobei das Pelletieren einschließt:
- Leiten von Strängen des geschmolzenen PET-Polymers durch ein Kühlbad, um die Polymerschmelze mindestens teilweise zu härten; und
- Umwandeln der Polymerstränge, die gekühlt und mindestens teilweise verfestigt worden sind, zu Pellets durch Schneiden.

2. Verfahren nach Anspruch 1, **dadurch gekennzeichnet, dass** das geschmolzene PET-Polymer durch Extrusion in das Kühlbad gekühlt wird, wobei das Kühlbad ein Wasserbad ist.

3. Verfahren nach Anspruch 2, **dadurch gekennzeichnet, dass** die Temperatur des Wasserbads zwischen etwa 140 und etwa 230 °C liegt.

4. Verfahren nach Anspruch 2, **dadurch gekennzeichnet, dass** die Temperatur des Wasserbads zwischen etwa 20 und etwa 80 °C liegt.

5. Verfahren nach einem der Ansprüche 2 bis 4, **dadurch gekennzeichnet, dass** das Wasserbad des Weiteren ein oder mehrere Tenside einschließt.

6. Verfahren nach einem der Ansprüche 2 bis 5, **dadurch gekennzeichnet, dass** Restwasser von der Oberfläche der Polymerstränge mindestens teilweise abgewischt wird, bevor der Transport zu dem Pelletierer erfolgt.

7. Verfahren nach einem der vorhergehenden Ansprüche, **dadurch gekennzeichnet, dass** die Pellets Granulat sind, das von im Wesentlichen zylindrischer Form ist.

8. Verfahren nach einem der vorhergehenden Ansprüche, **dadurch gekennzeichnet, dass** der Extruder (400) ein Doppelschneckenextruder, ein Multischneckenextruder oder ein Planetenextruder ist

9. Verfahren nach einem der vorhergehenden Ansprüche, **dadurch gekennzeichnet, dass** ein Viskositätssensor (460) verwendet wird, um die Schmelzviskosität des geschmolzenen Polymers nach seiner Passage durch das Filtrationssystem (450) abzufühlen.

10. Verfahren nach einem der vorhergehenden Ansprüche, **dadurch gekennzeichnet, dass** das Filtrationssystem (450) mindestens einen Filter mit einer Mikronzahl von weniger als etwa 50 Mikrometern umfasst.

11. Verfahren nach einem der vorhergehenden Ansprüche, **dadurch gekennzeichnet, dass** der Extruder ein Multischneckenextruder ist, welcher umfasst:
(i) einen ersten Satellitenschneckenextruder, wobei der erste Satellitenschneckenextruder eine erste Satellitenschnecke umfasst, die so montiert ist, dass sie um eine zentrale Achse der ersten Satellitenschnecke rotiert;
(ii) einen zweiten Satellitenschneckenextruder, wobei der zweite Satellitenschneckenextruder eine zweite Satellitenschnecke umfasst, die so montiert ist, dass sie um eine zentrale Achse der zweiten Satellitenschnecke rotiert; und
(iii) ein Druckregelungssystem, das vorgesehen ist, um einen Druck innerhalb des ersten und des zweiten Satellitenschneckenextruders unter etwa 18 Millibar zu halten;
wobei das Druckregelungssystem verwendet wird, um einen Druck innerhalb des ersten und des zweiten Satellitenschneckenextruders auf unter etwa 18 Millibar zu reduzieren;
Leiten einer Schmelze, die Recyclingpolymer umfasst, durch den Multischneckenextruder, während der Druck innerhalb des ersten und des zweiten Satellitenschneckenextruders unter etwa 18 Millibar gehalten wird, so dass: (1) ein erster Anteil der Schmelze durch den ersten Satellitenschneckenextruder geleitet wird, und (2) ein zweiter Anteil der Schmelze durch den zweiten Satellitenschneckenextruder geleitet wird.

12. Verfahren nach einem der vorhergehenden Ansprüche, **dadurch gekennzeichnet, dass** im Wesentlichen saubere PET-Flaschenflocken, die weniger als etwa 50 ppm PVC und weniger als etwa 15 ppm Metalle umfassen, durch den Extruder geleitet werden.

13. Verfahren nach einem der vorhergehenden Ansprüche, **dadurch gekennzeichnet, dass** die Flocken direkt nach dem Waschen in den Extruder eingespeist werden.

## Revendications

1. Procédé destiné à la fabrication de pastilles de PET, ledit procédé comprenant le fait de :
- préparer des paillettes d'un polymère PET à partir de bouteilles de post-consommation par (a) triage de bouteilles PET de post-consommation et broyage desdites bouteilles pour obtenir des paillettes, (b) lavage desdites paillettes, et (c) identification et élimination des impuretés ou des paillettes impures ;
- faire passer les paillettes à travers une extrudeuse (400) qui met les paillettes sous la forme d'une masse fondue et purifie la masse fondue polymère de PET obtenue ;
- faire défiler le polymère de PET sous la forme d'une masse fondue à travers un système de filtration (450) après l'extrusion ; et
- transformer en pastilles le polymère de PET sous la forme d'une masse fondue ;
dans lequel ladite transformation en pastilles englobe le fait de :
- faire passer des brins dudit polymère de PET sous la forme d'une masse fondue à travers un bain de refroidissement jusqu'à obtenir un durcissement au moins partiel de la masse fondue polymère ; et
- transformer en pastilles par l'intermédiaire d'une découpe les brins polymères qui ont été refroidis et solidifiés au moins en partie.

2. Procédé selon la revendication 1, **caractérisé en ce que** ledit polymère de PET sous la forme d'une masse fondue est refroidi par extrusion au sein dudit bain de refroidissement, dans lequel ledit bain de refroidissement est un bain aqueux.

3. Procédé selon la revendication 2, **caractérisé en ce que** la température dudit bain aqueux se situe entre environ 140 et environ 230 °C.

4. Procédé selon la revendication 2, **caractérisé en ce que** la température dudit bain aqueux se situe entre environ 20 et environ 80 °C.

5. Procédé selon l'une quelconque des revendications 2 à 4, **caractérisé en ce que** ledit bain aqueux englobe en outre un ou plusieurs agents tensioactifs.

6. Procédé selon l'une quelconque des revendications 2 à 5, **caractérisé en ce que** l'on élimine par essuyage au moins en partie l'eau résiduelle à partir de la surface des brins polymères avant le transport de ces derniers jusqu'à la machine à pastiller.

7. Procédé selon l'une quelconque des revendications précédentes, **caractérisé en ce que** lesdites pastilles sont des nurdles qui possèdent essentiellement une configuration de forme cylindrique.

8. Procédé selon l'une quelconque des revendications précédentes, **caractérisé en ce que** ladite extrudeuse (400) est une extrudeuse à deux vis, une extrudeuse à vis multiples ou une extrudeuse à vis planétaires.

9. Procédé selon l'une quelconque des revendications précédentes, **caractérisé en ce que** l'on utilise un capteur de la viscosité (460) dans le but de détecter la viscosité à l'état fondu du polymère sous la forme d'une masse fondue après le passage de ce dernier à travers le système de filtration (450).

10. Procédé selon l'une quelconque des revendications précédentes, **caractérisé en ce que** ledit système de filtration (450) comprend au moins un filtre qui possède un degré de filtration inférieur à environ 50 microns.

11. Procédé selon l'une quelconque des revendications précédentes, **caractérisé en ce que** ladite extrudeuse est une extrudeuse à vis multiples qui comprend :
(i) une première extrudeuse qui possède une vis satellite, ladite première extrudeuse qui possède une vis satellite comprenant une première vis satellite qui est montée afin d'effectuer des rotations autour d'un axe central de ladite première vis satellite ;
(ii) une deuxième extrudeuse qui possède une vis satellite, ladite deuxième extrudeuse qui possède une vis satellite comprenant une deuxième vis satellite qui est montée afin d'effectuer des rotations autour d'un axe central de ladite deuxième vis satellite ; et
(iii) un système de régulation de la pression qui est conçu pour maintenir une pression régnant au sein de ladite première et de ladite deuxième extrudeuse qui possèdent des vis satellites à une valeur inférieure à environ 18 mbar ;
utiliser ledit système de régulation de la pression dans le but de réduire une pression régnant au sein de ladite première et de ladite deuxième extrudeuse qui possèdent des vis satellites à une valeur inférieure à environ 18 mbar ;
tandis que l'on maintient ladite pression régnant au sein de ladite première et de ladite deuxième extrudeuse qui possèdent des vis satellites à une valeur inférieure à environ 18 mbar, faire passer une masse fondue qui comprend un polymère recyclé à travers ladite extrudeuse à vis multiples d'une manière telle que : (1) une première portion de ladite masse fondue passe à travers ladite première extrudeuse qui possède une vis satellite, et (2) une deuxième portion de ladite masse fondue passe à travers ladite deuxième extrudeuse qui possède une vis satellite.

12. Procédé selon l'une quelconque des revendications précédentes, **caractérisé en ce que** l'on fait passer à travers l'extrudeuse des paillettes de bouteilles en PET essentiellement pures qui comprennent moins d'environ 50 ppm de PVC et moins d'environ 15 ppm de métaux.

13. Procédé selon l'une quelconque des revendications précédentes, **caractérisé en ce que** lesdites paillettes sont alimentées de manière directe dans l'extrudeuse à la suite dudit lavage.
